# EUROPÄISCHE PATENTSCHRIFT

(11) **EP 1 510 667 B1**
(45) Veröffentlichungstag und Bekanntmachung des Hinweises auf die Patenterteilung: **08.10.2008**
(21) Anmeldenummer: 04405497.1
(22) Anmeldetag: 05.08.2004
(51) Int. Cl.: F01N 1/02, F02B 33/04, F02M 35/12

(54) **Schalldämpfer**
Silencer
Silencieux

(30) Priorität: 26.08.2003 DE 10339539; 04.06.2004 CH 9512004
(43) Veröffentlichungstag der Anmeldung: 02.03.2005
(73) Patentinhaber: ABB Turbo Systems AG, 5400 Baden (CH)
(72) Erfinder: Kudernatsch, Günter, 5312 Döttingen (CH); Feld, Heinz-Jürgen, 5524 Niederwil (CH)
(74) Vertreter: ABB Patent Attorneys

(56) Entgegenhaltungen:
- DE-A1- 19 818 873
- US-A- 2 056 608
- US-A- 2 124 916
- US-A- 2 233 341
- US-A- 3 415 336
- US-A- 6 158 214
- PATENT ABSTRACTS OF JAPAN Bd. 1999, Nr. 03, 31. März 1999 (1999-03-31) & JP 10 318194 A (MITSUI ENG & SHIPBUILD CO LTD), 2. Dezember 1998 (1998-12-02)

## Beschreibung

Die Erfindung bezieht sich auf das Gebiet der Abgasturbolader für Brennkraftmaschinen. Sie betrifft einen Resonatorschalldämpfer gemäss dem Oberbegriff des Patentanspruchs 1. Sie betrifft ferner eine Brennkraftmaschine mit einem entsprechenden Resonatorschalldämpfer.

### Stand der Technik

Massgeblich für die Lärmemissionen eines Abgasturboladers für Brennkraftmaschinen ist der Verdichter. Insbesondere werden am druckseitigen Austritt des Verdichters hohe Lärmpegel in die luftführenden Leitungen eingeleitet, für deren Dämpfung es bislang keine zufriedenstellende Lösung gibt.

Bei im Strömungskanal angeordneten Absorbern ergibt sich das Problem, dass durch die hohen Strömungsgeschwindigkeiten der komprimierten Luft das Absorbermaterial durch die Lochblechabdeckungen ausgeblasen wird. Durch Ablagerung des Materials in den meist nachfolgenden Kühlern können diese verstopft werden. Auch sind die auf mineralische Basis hergestellten Fasermaterialen in den nachfolgenden Motorenkomponenten der Brennkraftmaschinen unerwünscht.

Auf dem Prinzip eines Helmholtz-Resonators beruhende Schalldämpfer bestehen aus einer oder mehren Kammern, welche mittels einem Blech mit darin eingelassenen Öffnungen abgedeckt werden. Die Luft in der Kammer dient den schwingenden Luftmassepfropfen in den Öffnungen als Feder. Die hohe Strömungsgeschwindigkeit der am Schalldämpfer vorbeigeführten komprimierten Luft führt jedoch dazu, dass ein erheblicher Teil der schwingenden Luftmasse abgeschert wird. Der schwingende Luftpfropfen wird kleiner. Dies führt zu Verstimmung der Auslegefrequenz und zum Nachlassen der Dämpfungswirkung. Herkömmliche Resonatorschalldämpfer sind demzufolge bei Strömungsgeschwindigkeiten des vorbeifliessenden Mediums von bis zu 100 m/s nicht ausreichend wirksam.

Ein im Strömungskanal angeordneter, herkömmlicher Resonator, wie beispielsweise in JP 10-318194 beschrieben, bringt daher aufgrund der hohen Strömungsgeschwindigkeiten nicht den erwünschten Effekt.

US 6158214 offenbart einen Reflexionsschalldämpfer einer Abgasanlage eines Kraftfahrzeuges, bei welchem in ein von einer Reflexionskammer umgebenes Auslassrohr Langlochbohrungen eingelassen sind.

### Kurze Darstellung der Erfindung

Der Erfindung liegt folglich die Aufgabe zugrunde, einen Schalldämpfer der eingangs genannten Art zu schaffen, welcher auch bei hohen Strömungsgeschwindigkeiten eine gute Dämpfungswirkung zeigt.

Erfindungsgemäss wird diese Aufgabe mit den Merkmalen des Patentanspruchs 1 gelöst.

Der Resonatorschalldämpfer weist mindestens eine Kammer auf, welche einen Strömungskanal oder Teile des Umfanges umschliesst. Die Kammer ist gegen den Strömungskanal hin durch ein Abdeckblech vollständig abgedeckt, wobei das Abdeckblech mehrere Öffnungen aufweist. Die Öffnungen des Abdeckblechs sind erfindungsgemäss als Schlitze ausgebildet, welche im wesentlichen in Strömungsrichtung ausgerichtet sind.

Aufgrund der Länge der Schlitze ist es der Strömung nicht möglich, den schwingenden Luftmassepfropfen in den Öffnungen auf der gesamten Länge gleichzeitig abzuscheren bzw. dessen Bewegungsmöglichkeit auf der gesamten Länge synchron einzuschränken. Die Dämpfungswirkung des erfindungsgemässen Schalldämpfers bleibt daher auch bei grosser Strömungsgeschwindigkeit weitgehend erhalten.

Um eine optimale Dämpfwirkung zu erzielen, wird das Verhältnis der Summe der Öffnungsflächen zur gegen den Strömungskanal gerichteten Gesamtoberfläche einer Kammer zwischen 4% und 25%, insbesondere zwischen 6% und 14% gewählt. Bei zu kleinem respektive zu grossem Verhältnis nimmt die Wirkung ab.

Die Länge der Schlitze in Strömungsrichtung wird wesentlich grösser als die Breite der Schlitze gewählt. Durch das Anbringen von unterschiedlich lang ausgebildeten Schlitzen im Abdeckblech wird Wirksamkeit des Dämpfers verbessert.

Werden entlang des Strömungskanals mehrere, voneinander getrennte Kammern angeordnet, kann die Dämpfungswirkung auf einem breiteren Frequenzbereich abgestimmt werden. Hierfür werden die Anzahl, die Länge und die Gesamtsumme der Öffnungsflächen der Schlitze entsprechend variiert.

Der auch bei hohen Strömungsgeschwindigkeiten wirksame erfindungsgemässe Schalldämpfer wird vorteilhafterweise zur Dämpfung des Verdichterlärmes eines Turboladers verwendet. Besonders im Bereich des Ladeluftauslasses, in dem erhebliche Lärmwerte und die genannt grossen Strömungsgeschwindigkeiten auftreten, kann damit eine wesentlicher Beitrag zur angestrebten Verringerung der Lärmemissionen der nachfolgenden luftführenden Komponenten erreicht werden.

Zum Einbau des vorliegenden Schalldämpfers eignet sich besonders der Kompensator, welcher die Verbindung von Verdichteraustrittsspirale und Motorkomponenten darstellt. Durch die Wahl des Kompensators als wesentlicher Einbauort ergibt sich auch die Möglichkeit der Nachrüstung bereits gelieferter bzw. in Betrieb stehender Brennkraftmaschinen.

Ebenfalls günstig ist der Einbau des Schalldämpfers direkt in den Ausgang des spiralenförmigen Verdichtergehäuses. Aufgrund der Lage näher an der Lärmquelle und des etwas engeren Strömungskanals kann die Wirkung des Resonators noch zusätzlich verbessert werden.

Weitere Vorteile ergeben sich aus den abhängigen Ansprüchen.

### Kurze Beschreibung der Zeichnungen

Im folgenden sind anhand der Figuren Ausführungsbeispiele des Einbaus des erfindungsgemässen Schalldämpfers sowie ein Ausführungsbeispiel des Aufbaus des Schalldämpfers schematisch dargestellt und näher erläutert. In allen Figuren sind gleichwirkende Elemente mit gleichen Bezugszeichen versehen. Es zeigen:
- Fig. 1: eine schematische Darstellung des ladeluftseitigen Einbaus zwischen einem Turbolader und einer Brennkraftmaschine mit einem Kompensatorelement mit einem integrierten Resonatorschalldämpfer,
- Fig. 2: einen Schnitt in Strömungsrichtung durch das Kompensatorelement und den integrierten Resonatorschalldämpfer nach Fig.1, wobei der Kompensator in der linken Hälfte der Figur in normalem und in der rechten Hälfte in leicht gestrecktem Zustand dargestellt ist, und
- Fig. 3: eine Teilschnittansicht auf ein spiralenförmiges Verdichtergehäuse mit einem integrierten Resonatorschalldämpfer in dem Spiralenaustritt.

### Weg zur Ausführung der Erfindung

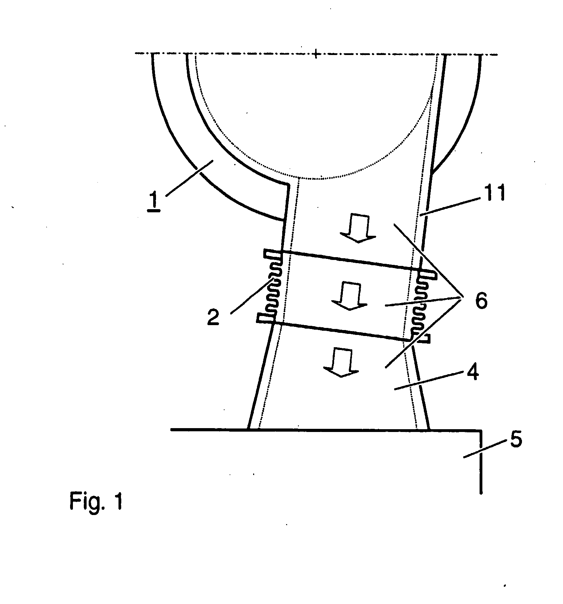

Fig. 1 zeigt schematisch einen Teil einer Brennkraftmaschine mit einem angeschlossenen Turbolader. Bei der Brennkraftmaschine handelt es sich beispielsweise um einen Grossdieselmotor, wie er etwa auf Schiffen oder stationären Anlagen zur Stromerzeugung eingesetzt wird. Der Turbolader umfasst einen Verdichter 1, in welchem Luft angesaugt und verdichtet wird, um anschliessend durch den Verdichteraustritt 11 und eine Verbindungsleitung 4 der Ladeluftkühlung 5 der Brennkraftmaschine zugeführt zu werden. Die verdichtete Luft strömt dabei in Pfeilrichtung durch einen Strömungskanal 6, welcher je nach Anordnung des Turboladers auf der Brennkraftmaschine kürzer oder länger sein und eines oder mehrere, rohrförmige Zwischenstücke umfassen kann. Eines dieser Zwischenstücke ist das schematisch dargestellte Kompensatorelement 2.

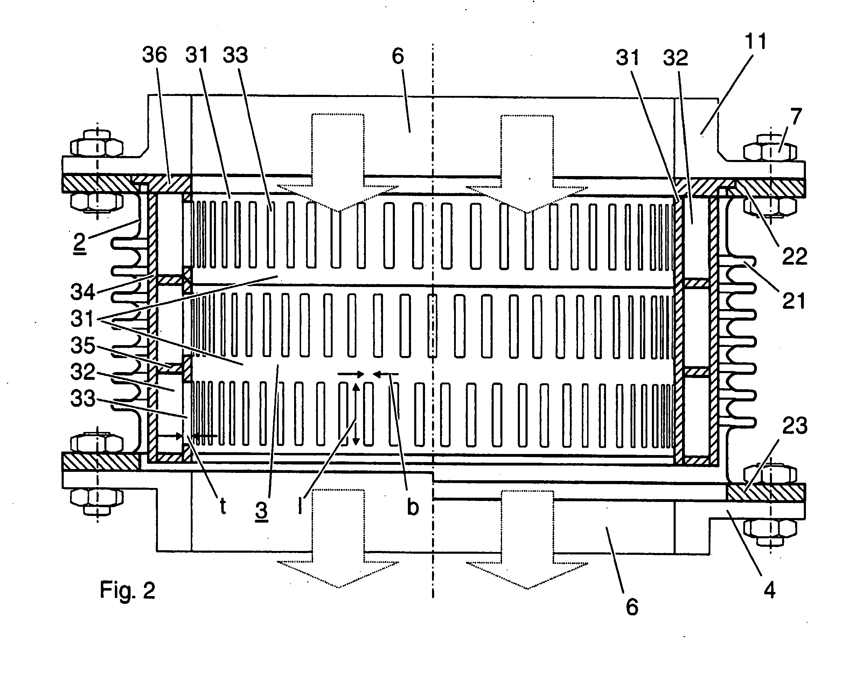

Das Kompensatorelement, welches in Fig. 2 vergrössert dargestellt ist, umfasst einen aus einem elastischen Blech geformtes Kompensationselement 21, welches zwischen zwei Befestigungsflanschen 22 und 23 angeordnet ist. Das Kompensatorelement ist dank dem elastischen Kompensationsbereich in der Länge dehnbar, wie dies in der rechten Hälfte von Fig. 2 dargestellt ist. Damit können Distanzänderungen zwischen dem Turbolader und der Brennkraftmaschine ausgeglichen werden. Die Befestigungsflansche 22 und 23 sind mit Schrauben 7 oder anderen Befestigungsmitteln mit entsprechenden Flanschen des Abströmstutzens 11 und der Verbindungsleitung 4 zum Kühler 5 verbunden.

Im Innem des Kompensators ist erfindungsgemäss der Schalldämpfer 3 angeordnet. Es handelt sich um einen Resonatorschalldämpfer mit schlitzförmigen Öffnungen 33 in dem Abdeckblech 31, welches die Resonatorkammern 32 gegen den Strömungskanal 6 abtrennen. In der dargestellten Ausführungsform umfasst der Schalldämpfer drei in Strömungsrichtung nacheinander angeordnete Resonatorkammern mit jeweils unterschiedlich vielen Schlitzen. Die Kammern können durch separate Abdeckbleche oder aber durch ein oder mehrere gemeinsame Abdeckbleche abgedeckt sein. In der dargestellten Ausführungsform ist beispielhaft die obere Kammer durch ein eigenes Abdeckblech abgedeckt, während sich die beiden unteren Kammern unter einem gemeinsamen Abdeckblech befinden.

Die einzelnen Kammern, welche auch entlang dem Umfang nebeneinander angeordnet sein können, sind durch Wandteile 35 unterteilt. Radial aussen sind die Kammern durch Rückwandteile 34 begrenzt. Bei am Umfang angeordneten Kammern werden diese gegeneinander durch entsprechende, parallel zur Achse eingesetzte Wandteile abgetrennt.

Die Schlitze sind im wesentlichen in Strömungsrichtung ausgerichtet und haben eine Länge I, welche mindestens dreimal grösser ist als die Breite b. Da die Strömung nicht homogen in eine Richtung verläuft, können die einzelnen Schlitze auch in kleinen Winkeln zueinander angeordnet sein, um dem Strömungsverlauf besser zu entsprechen. Je nach Strömungsverlauf können die Schlitze auch gebogen ausgebildet sein. Die Tiefe t der Schlitze kann beispielsweise über die Dicke des Abdeckbleches realisiert werden. Alle drei Grössen (Länge, Breite und Tiefe der Schlitze) haben, ebenso wie die Anzahl der Schlitze pro Kammer sowie die Abmessungen der Kammern, einen direkten Einfluss auf das Dämpfvermögen des Schalldämpfers.

Der Schalldämpfer 3 ist als freitragende Einheit ausgebildet. In die stirnseitige Wand 36 ist ein Absatz integriert, welcher zur Befestigung des Schalldämpfers an dem Kompensatorelement in eine entsprechende Ausnehmung in dem Befestigungsflansch 22 passt. Beim Montieren wird somit zuerst der Schalldämpfer 3 und das Kompensatorelement 2 zusammengestellt. Anschliessend wird das Kompensatorelement mitsamt dem Schalldämpfer zwischen Verdichteraustritt und motorseitiger Luftleitung eingesetzt und beidseitig an den vorgesehenen Befestigungsflanschen festgeschraubt. Auf der Seite des Verdichteraustrittes wird dabei das Stirnwandteil 36 zwischen dem Befestigungsflansch 22 und dem Flansch des Verdichteraustrittes 11 festgeklemmt. Der Schalldämpfer kann alternativ auch auf der Seite der Verbindungsleitung 4 zum Kühler entsprechend festgeklemmt sein.

Der Schalldämpfer kann das unbelastete Kompensatorelement in und/ oder entgegen der Strömungsrichtung in der Länge in die zu- und abführende Leitung überragen.

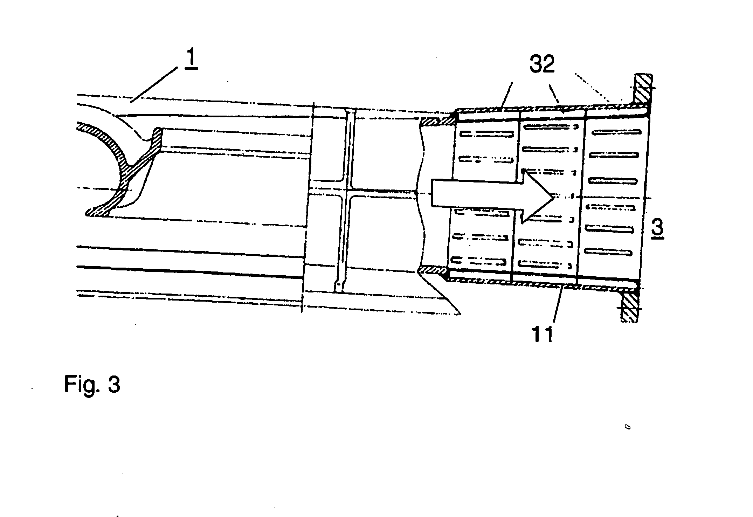

Fig. 3 zeigt eine zweite Möglichkeit, wie der erfindungsgemässe Schalldämpfer im Bereich der Verdichterabströmung angeordnet werden kann. Der Schalldämpfer ist als Bestandteil des spiralenförmigen Verdichtergehäuses angeordnet, und zwar an dessen Ausgang im sogenannten Austritts- oder Abströmstutzen 11. Durch die Anordnung des Schalldämpfers 3 in dem Bereich direkt am Spiralenaustritt kann die Schalldämpfung noch etwas verbessert werden. Der Schall enthält in diesem Bereich viele Anteile, die sich nicht ungedämpft in Richtung Verdichteraustritt fortpflanzen können, sondern vom Schalldämpfer gedämpft werden. Der etwas geringere Durchmesser des Strömungskanals im Austrittsstutzen sorgt ebenfalls für eine etwas höhere Dämpfung. Auch bei diesem Schalldämpfer kann durch die Kombination von mehreren Resonatorkammern 32 mit verschiedenen Abmessungen (Anzahl, Länge, Breite Tiefe, Form und Anordnung der Schlitze) die wirksame Bandbreite des grundsätzlich schmalbandig wirkenden Resonators vergrössert und so eine Wirkung in zwei oder mehr Frequenzbereichen erreicht werden. Der Schalldämpfer im Abströmstutzen kann auch als separater Einsatz gefertigt sein, welcher bei der Montage in eine entsprechende Ausnehmung im Gehäuse eingesetzt wird.

Obwohl sich der erfindungsgemässe Schalldämpfer mit den im wesentlichen in Strömungsrichtung ausgerichteten Schlitzen besonders gut für den Bereich des Verdichterabströmbereichs eignet, kann er auch in anderen Bereichen der Strömungskanäle eingesetzt werden, beispielsweise im Ansaugbereich des Verdichters oder auch turbinenseitig.

Die Funktionsweise des erfindungsgemässen Resonatorschalldämpfers wird folgend erläutert. Bei einem herkömmlichen Helmholtz-Resonators mit einer kreisrunden Öffnung entspricht die Masse der Öffnung in etwa der Masse und das Luftvolumen in der Kammer der Feder eines Masse-Federsystems. Das Kammervolumen ist durch das Abdeckblech von der Strömung abgetrennt. Wenn nun eine Strömung mit grosser Geschwindigkeit an der Öffnung vorbeizieht wird ein Teil des schwingenden Luftpfropfens durch die Strömung abgeschert. Der schwingende Luftpfropfen wird kleiner, was zu einer Frequenzverschiebung führt. Weiter wird die radiale Bewegungsmöglichkeit des Pfropfens durch die vorbestreichende Luft derart behindert, dass sich zusätzlich eine reduzierte Dämpfungswirkung ergibt.

Dieser Effekt wird bei dem erfindungsgemässen Schalldämpfer durch den Einsatz von länglichen Schlitzöffnungen beträchtlich reduziert. Aufgrund der Länge des Schlitzes ist es der Strömung nicht möglich den Massepfropfen auf der gesamten Länge gleichzeitig abzuscheren bzw. dessen Bewegungsmöglichkeit auf der gesamten Länge synchron einzuschränken.

### Bezugszeichenliste

- 1: Verdichter
- 11: Verdichteraustritt, Abströmstutzen
- 2: Kompensatorelement
- 21: Kompensationselement
- 22, 23: Befestigungsflansch
- 3: Schalldämpfer
- 31: Abdeckblech
- 32: Resonatorkammer
- 33: Schlitzöffnung
- 34: Kammerrückwand
- 35: Kammerunterteilungsstück
- 36: Schalldämpferstirnwand
- 4: Verbindungsleitung zum Kühler
- 5: Kühler
- 6: Strömungskanal, Strömung
- 7: Befestigungsmittel, Schrauben
- I: Länge der Schlitzöffnung
- b: Breite der Schlitzöffnung
- t: Tiefe der Schlitzöffnung

## Patentansprüche

1. Resonatorschalldämpfer (3) mit mindestens einer Kammer (32), welche einen Strömungskanal (6) zumindest teilweise umschliesst,
wobei die mindestens eine Kammer (32) gegen den Strömungskanal (6) hin durch ein Abdeckblech (31) vollständig abgedeckt ist,
wobei das Abdeckblech (31) mehrere entlang dem Umfang des Strömungskanals (6) angeordnete Öffnungen aufweist, welche als in Strömungsrichtung ausgerichtet Schlitze (33) ausgebildet sind, wobei das Verhältnis der Länge (l) zur Breite (b) der Schlitze (33) grösser als 3 ist, **dadurch gekennzeichnet, dass** die Schlitze (33) zumindest teilweise unterschiedlich lang ausgebildet sind.

2. Resonatorschalldämpfer nach Anspruch 1, **dadurch gekennzeichnet, dass** das Verhältnis der Summe der Öffnungsflächen (33) zur gegen den Strömungskanal gerichteten Gesamtoberfläche (31) der jeweiligen Kammer zwischen 4% und 25% liegt.

3. Resonatorschalldämpfer nach Anspruch 2, **dadurch gekennzeichnet, dass** das Verhältnis der Summe der Öffnungsflächen (33) zur gegen den Strömungskanal gerichteten Gesamtoberfläche (31) der jeweiligen Kammer zwischen 6% und 14% liegt.

4. Resonatorschalldämpfer nach einem der Ansprüche 1 bis 3, **dadurch gekennzeichnet,** der Schalldämpfer mehrere, in Strömungsrichtung nacheinander angeordnete Kammern (32) umfasst.

5. Resonatorschalldämpfer nach Anspruch 4, **dadurch gekennzeichnet, dass** die Kammern je durch ein separates Abdeckblech abgedeckt sind.

6. Resonatorschalldämpfer nach einem der Ansprüche 4 oder 5, **dadurch gekennzeichnet, dass** die Abdeckungen der mehreren Kammern (32) jeweils eine unterschiedliche Anzahl Schlitze (33) pro Kammer aufweist.

7. Brennkraftmaschine, mit wenigstens einem Abgasturbolader, wobei wenigstens ein strömungsführendes Element (2) im Bereich des Abgasturboladers wenigstens einen Resonatorschalldämpfer (3) nach einem der vorhergehenden Ansprüche umfasst.

8. Brennkraftmaschine nach Anspruch 7, **dadurch gekennzeichnet, dass** im Bereich des Verdichteraustrittes (11) ein Kompensatorelement (2) vorgesehen ist, und dass der Schalldämpfer (3) grösstenteils als integraler Teil des Kompensatorelements ausgebildet und montierbar ist.

9. Brennkraftmaschine nach einem der Ansprüche 7 oder 8, **dadurch gekennzeichnet, dass** ein Kompensatorelement (2) zwischen einem Abströmstutzen (11) am Verdichteraustritt und einem in ein Ladeluftkühler (5) mündende Verbindungsleitung (4) angeordnet ist, und dass der Schalldämpfer (3) den Kompensator in und/ oder entgegen der Strömungsrichtung zumindest einseitig derart überragt, dass der Schalldämpfer in die Verbindungsleitung und/ oder den Abströmstutzen hineinragt.

10. Brennkraftmaschine nach Anspruch 9, **dadurch gekennzeichnet, dass** der Abgasturbolader einen Verdichter (1) zum Verdichten eines gasförmigen Mediums umfasst, wobei der Verdichter ein Verdichtergehäuse umfasst, mit einer gaseintrittsseitigen Öffnung und einer gasaustrittsseitigen Öffnung, wobei die gasaustrittsseitige Öffnung einen Abströmstutzen (11) zum Befestigen eines strömungsführenden Elementes umfasst, und dass der Resonatorschalldämpfer (3) in dem Abströmstutzen am Verdichteraustritt angeordnet ist.

## Claims

1. Resonator muffler (3) with at least one chamber (32) which at least partially surrounds a flow duct (6), the at least one chamber (32) being covered completely relative to the flow duct (6) by a cover plate (31), the cover plate (31) having a plurality of orifices arranged along the circumference of the flow duct (6), which orifices are designed as slots (33) oriented in the flow direction, the ratio of the length (1) to the width (b) of the slots (33) being higher than 3, **characterized in that** the slots (33) are designed at least partially with a different length.

2. Resonator muffler according to Claim 1, **characterized in that** the ratio of the sum of the orifice areas (33) to the total area (31), directed toward the flow duct, of the respective chamber lies between 4% and 25%.

3. Resonator muffler according to Claim 2, **characterized in that** the ratio of the sum of the orifice areas (33) to the total area (31), directed toward the flow duct, of the respective chamber lies between 6% and 14%.

4. Resonator muffler according to one of Claims 1 to 3, **characterized in that** the muffler comprises a plurality of chambers (32) arranged in succession in the flow direction.

5. Resonator muffler according to Claim 4, **characterized in that** the chambers are each covered by a separate cover plate.

6. Resonator muffler according to either one of Claims 4 and 5, **characterized in that** the covers of the plurality of chambers (32) have in each case a different number of slots (33) per chamber.

7. Internal combustion engine with at least one exhaust gas turbocharger, at least one flow-carrying element (2) in the region of the exhaust gas turbocharger comprising at least one resonator muffler (3) according to one of the preceding claims.

8. Internal combustion engine according to Claim 7, **characterized in that** a compensator element (2) is provided in the region of the compressor outlet (11), and **in that** the muffler (3) is designed and is mountable for the most part as an integral part of the compensator element.

9. Internal combustion engine according to either one of Claims 7 and 8, **characterized in that** a compensator element (2) is arranged between an outflow connection piece (11) at the compressor outlet and a connecting line (4) issuing into a charge-air cooler (5), and **in that** the muffler (3) projects beyond the compensator in and/or opposite to the flow direction, at least on one side, in such a way that the muffler projects into the connecting line and/or the outflow connection piece.

10. Internal combustion engine according to Claim 9, **characterized in that** the exhaust gas turbocharger comprises a compressor (1) for compressing a gaseous medium, the compressor comprising a compressor housing with an orifice on the gas inlet side and an orifice on the gas outlet side, the orifice on the gas outlet side comprising an outflow connection piece (11) for fastening a flow-carrying element, and **in that** the resonator muffler (3) is arranged in the outflow connection piece of the compressor outlet.

## Revendications

1. Silencieux à résonateur (3) comprenant au moins une chambre (32), qui entoure au moins partiellement un canal d'écoulement (6),
l'au moins une chambre (32) étant complètement recouverte vers le canal d'écoulement (6) par une tôle de recouvrement (31),
la tôle de recouvrement (31) présentant plusieurs ouvertures disposées le long de la périphérie du canal d'écoulement (6), qui sont réalisées sous forme de fentes (33) orientées dans la direction de l'écoulement, le rapport de la longueur (1) à la largeur (b) des fentes (33) étant supérieur à 3, **caractérisé en ce que** les fentes (33) sont réalisées au moins en partie avec des longueurs différentes.

2. Silencieux à résonateur selon la revendication 1, **caractérisé en ce que** le rapport de la somme des surfaces d'ouverture (33) à la surface totale (31) orientée vers le canal d'écoulement de chaque chambre est compris entre 4 % et 25 %.

3. Silencieux à résonateur selon la revendication 2, **caractérisé en ce que** le rapport de la somme des surfaces d'ouverture (33) à la surface totale (31) orientée vers le canal d'écoulement de chaque chambre est compris entre 6 % et 14 %.

4. Silencieux à résonateur selon l'une quelconque des revendications 1 à 3, **caractérisé en ce que** le silencieux comprend plusieurs chambres (32) disposées les unes derrière les autres dans la direction de l'écoulement.

5. Silencieux à résonateur selon la revendication 4, **caractérisé en ce que** les chambres sont recouvertes à chaque fois par une tôle de recouvrement séparée.

6. Silencieux à résonateur selon l'une quelconque des revendications 4 ou 5, **caractérisé en ce que** les recouvrements des diverses chambres (32) présentent à chaque fois un nombre de fentes (33) différent par chambre.

7. Moteur à combustion interne comprenant au moins une turbosoufflante à gaz d'échappement, au moins un élément (2) de guidage du courant comprenant, dans la région de la turbosoufflante à gaz d'échappement un silencieux à résonateur (3) selon l'une quelconque des revendications précédentes.

8. Moteur à combustion interne selon la revendication 7, **caractérisé en ce que** dans la région de la sortie du compresseur (11), on prévoit un élément de compensateur(2) et **en ce que** le silencieux (3) est réalisé et peut être monté pour la majeure partie sous forme de partie intégrale de l'élément de compensation.

9. Moteur à combustion interne selon l'une quelconque des revendications 7 ou 8, **caractérisé en ce qu'**un élément de compensateur (2) est disposé entre une tubulure d'afflux (11) à la sortie du compresseur et une conduite de connexion (4) débouchant dans un refroidisseur d'air de suralimentation (5), et **en ce que** le silencieux (3) dépasse du compensateur dans et/ou à l'encontre de la direction de l'écoulement au moins d'un côté, de telle sorte que le silencieux pénètre dans la conduite de connexion et/ou dans la tubulure d'afflux.

10. Moteur à combustion interne selon la revendication 9, **caractérisé en ce que** la turbosoufflante à gaz d'échappement comprend un compresseur (1) pour comprimer un milieu gazeux, le compresseur comprenant un boitier de compresseur avec une ouverture du côté de l'entrée de gaz et une ouverture du côté de la sortie de gaz, l'ouverture du côté de la sortie de gaz comprenant une tubulure de sortie (11) pour fixer un élément guidant l'écoulement, et **en ce que**
le silencieux à résonateur (3) est disposé dans la tubulure de sortie à la sortie du compresseur.
